# EUROPÄISCHE PATENTANMELDUNG

(11) **EP 0 992 386 A1**
(43) Veröffentlichungstag der Anmeldung: **12.04.2000**
(21) Anmeldenummer: 99116895.6
(22) Anmeldetag: 07.09.1999
(51) Int. Cl.: B60K 28/04, B60K 31/00

(54) **Verfahren und Einrichtung zur Steuerung des Bremssystemes bei einem Kraftfahrzeug**

(30) Priorität: 07.10.1998 DE 19846193
(71) Anmelder: Volkswagen Aktiengesellschaft, 38436 Wolfsburg (DE)
(72) Erfinder: Andreas, Peter, Dipl.-Ing., 38518 Gifhorn (DE); Binfet-Kull, Maria, 38476 Barwedel (DE); von Meel, Franciscus, 85113 Böhmfeld (DE); Bäker, Wolfgang, 38114 Braunschweig (DE); Bastian, Andreas, Dr., 38114 Braunschweig (DE); Ruchatz, Thomas, 38165 Lehre (DE); Dobbeck, Florian, 38442 Wolfsburg (DE); Lissel, Ernst, 38442 Wolfsburg (DE); Schneider, Arthur, 38112 Braunschweig (DE)

(57) **Zusammenfassung**

Die Erfindung betrifft ein Verfahren sowie eine Einrichtung (2) zur Steuerung des Bremssystemes (10-12) bei einem Kraftfahrzeug.

Um sowohl bei einem Verfahren, wie auch bei einer Einrichtung der gattungsgemäßen Art ein ungewolltes Losrollen des noch im Betrieb befindlichen Fahrzeuges, oder des abgestellten Fahrzeuges, nach Verlassen des Fahrzeugführers aus dem Fahrzeug zu verhindern, ist erfindungsgemäß vorgeschlagen, daß abhängig von einem Signal (1), welches kennzeichnet, daß der Fahrzeugführer das Fahrzeug verläßt, das Bremssystem (10-12) angesteuert wird.

## Beschreibung

Die Erfindung betrifft ein Verfahren sowie eine Einrichtung zur Steuerung des Bremssystemes bei einem Kraftfahrzeug gemäß Oberbegriff der Patentansprüche 1 und 7.

Verfahren und Einrichtungen zur Steuerung des Bremssystemes sind vielfach bekannt. Hierbei ist jedoch zu unterscheiden zwischen Bremsvorgängen, die während der Fahrt eingeleitet werden und Bremsvorgängen, die lediglich ein Festsetzen oder Blockieren des Fahrzeuges in der Parkposition bewirken. In den meisten Fällen sind diese beiden Bremsarten auch unterschiedlichen und voneinander autarken Bremssystemen zugeordnet. So ist die Feststellbremse für die Parkposition zumeist mechanisch, wohingegen die Betätigung der Bremsanlage für Bremsungen während der Fahrt druckmittelbetrieben und zum Teil elektrisch bzw. elektromechanisch unterstützt sind. Darüber hinaus besteht eine weitere Blockiermöglichkeit bei abgestellten Fahrzeugen darin, nach Abschalten des Motors entweder einen Gang einzulegen, oder bei Automatikgetrieben die Parkposition einzustellen, in beiden Fällen erfolgt eine direkte Kopplung des Fahrzeuges mit dem Getriebe, welches eine Rollbewegung der Räder hemmt.

Für den Fahrbetrieb ist in den meisten Fällen ein autarkes Bremssystem zuständig. Vielfach werden überdies abstandsgeregelte Systeme verwendet. Bei den bekannten Abstandsregelverfahren werden die Abstände zu vorausfahrenden Fahrzeugen ermittelt und bei Unterschreitung eines Mindestabstandes ein Bremsvorgang automatisch eingeleitet. Solche Systeme sind überdies zweckmäßig in Verbindung mit Tempomatsteuerungen. Hierbei soll ein Auffahren auf das vorausfahrende Fahrzeug verhindert werden. Solche Abstandsregeleinrichtungen in Verbindung mit der Beaufschlagung der Bremseinrichtung in Kraftfahrzeugen ist beispielsweise aus der US 5,451,820 bekannt. Hierbei wird jedoch lediglich eine entsprechende Abstandserkennung verwendet, die auch eine entsprechende automatische Betätigung der Bremse bewirkt.

Aus der DE 33 25 713 A1 ist ebenfalls eine Abstandsregelanlage für Kraftfahrzeuge bekannt, wobei in einem bestimmten Bereich einer ermittelten Distanz automatisch verzögert oder beschleunigt wird. Die Einflußnahme auf die Bremsanlage ist quasi vorausschauend, so daß keine Vollbremsung notwendig wird.

Aus der DE 195 23 111 A1 ist eine Einrichtung zur Regelung des Abstandes eines Kraftfahrzeuges zu einem vorausfahrenden Fahrzeug bekannt, bei welchem lediglich ein entsprechendes Regelverfahren zugrundegelegt wird, welches die unterschiedlichen Geschwindigkeiten berücksichtigt.

Alle diese Verfahren, die die Funktion zwischen Abstandsregelung und Bremsanlagenbetätigung betreffen, lassen den Aspekt einer ungewollten Beschleunigung oder eines mannlosen Fahrzeuges völlig außer acht.

Gefährlich sind Situationen beispielsweise dann, wenn entweder Fahrzeuge in Betrieb gelassen, aber kurzfristig verlassen werden, wobei es vergessen wird, die Bremse festzustellen. Ein Anfahren des Vordermannes, so lange man beispielsweise in einem Stau neben seinem Fahrzeug steht, kann somit auf unachtsame Weise ein ungewolltes Anfahren des kurzfristig mannlosen Fahrzeuges bewirken. Die daraus resultierenden Situationen können sehr gefährlich sein. Im übrigen berücksichtigen solche Systeme mit automatischer Abstandsregelung und Bremseingriff in herkömmlicher Art auch nicht die Situation, daß ein Fahrzeug kurzfristig abgestellt wird ohne Bremseingriff.

Der Erfindung liegt davon ausgehend somit die Aufgabe zugrunde, ein Verfahren sowie eine Einrichtung zur Steuerung des Bremssystemes bei Kraftfahrzeugen dahingehend zu verbessern, daß das möglicherweise nur kurzfristig mannlose Fahrzeug sich nicht ungewollt bewegen kann.

Die gestellte Aufgabe ist bei einem Verfahren der gattungsgemäßen Art erfindungsgemäß dadurch gelöst, daß abhängig von einem Signal, welches kennzeichnet, daß der Fahrzeugführer das Fahrzeug verläßt, das Bremssystem angesteuert wird. Weitere vorteilhafte Ausgestaltungen dieses erfindungsgemäßen Verfahrens sind in den abhängigen Ansprüchen 2 - 6 angegeben.

Hinsichtlich einer Einrichtung der gattungsgemäßen Art ist die gestellte Aufgabe erfindungsgemäß dadurch gelöst, daß Sensoren vorgesehen sind, über die das Verlassen des Fahrzeugführers aus dem Fahrzeug erkennbar ist, und daß über die besagten Sensoren in diesem genannten Fall das Bremssystem automatisch aktivierbar ist.

Weitere vorteilhafte Ausgestaltungen der erfindungsgemäßen Einrichtung sind in den übrigen Ansprüchen 8 - 11 angegeben.

Der Kern der Erfindung besteht darin, daß ein ungewolltes Losrollen des Fahrzeuges bei einem kurzfristig mannlosen Fahrzeug dadurch verhindert wird, daß über ein entsprechendes Signal das Verlassen des Fahrzeugführers aus dem Fahrzeug erkannt werden kann. Eine solche verfahrensgemäße Vorgehensweise bzw. eine solche einrichtungsgemäße Realisierung bewirkt, daß zum einen das Vergessen oder Festsetzen der Feststellbremse beim Verlassen des Fahrzeuges automatisch nachgeholt wird, und auch beim Verlassen eines Fahrzeuges, bei welchem noch der Motor in Betrieb ist, ebenfalls ein automatisches Festsetzen durch Betätigen der Bremsanlage erfolgt. Das Fahrzeug kann so auch bei einem Notverlassen des Fahrzeuges sich nicht selbsttätig in Bewegung setzen und zum anderen wird das Vergessen der Feststellbremse beim Parken des Fahrzeuges sodann nachgeholt, wenn der Fahrzeugführer das Fahrzeug verläßt. Dieser Vorgang wird dann automatisch eingeleitet, wie oben beschrieben.

In vorteilhafter Ausgestaltung des erfindungsgemäßen Verfahrens wird das Hauptbremssystem über das besagte Signal direkt angesteuert. Weiterhin kann die Handbremse elektromotorisch automatisch betätigt werden, wenn das besagte Signal in der oben genannten Form erscheint. Darüber hinaus ist es auch möglich, daß im Falle eines Automatikgetriebes dasselbe automatisch in die Parkposition geschaltet wird, sobald das oben genannte Signal vorliegt, welches das Verlassen des Fahrzeugführers aus dem Fahrzeug kennzeichnet. Dabei kann das erfindungsgemäße Verfahren auch in ein automatisches Abstandsregelungssystem, wie oben beschrieben, integriert sein. Dabei ist die Abstandsregelung, d. h. das automatische Beschleunigen des Fahrzeuges, wenn beispielsweise das vorangehende Fahrzeug sich bewegt unterbunden, weil bei Verlassen des Fahrzeuges das oben besagte Signal die Abstandsregelung deaktiviert.

Die erfindungsgemäße Einrichtung bewirkt über die genannten Sensoren, die das Verlassen des Fahrzeugführers aus dem Fahrzeug erkennen, eine automatische Aktivierung des Bremssystemes. Dabei kann wie beim erfindungsgemäßen Verfahren die Ansteuerung entweder auf das Bremssystem direkt bzw. den Bremsverstärker wirken, oder aber eine besagte elektromotorische Betätigung der Handbremse oder eine Betätigung des Automatikgetriebes bewerkstelligen. Die besagten erfindungsgemäßen Sensoren können dabei beispielsweise als Sitzsensor und/oder Türöffnungssensor für die Tür des Fahrzeugführers ausgebildet sein. Auf diese Weise wird auf sichere und zweckmäßige Art das Verlassen des Fahrzeugführers aus dem Fahrzeug für das System elektronisch erkennbar.

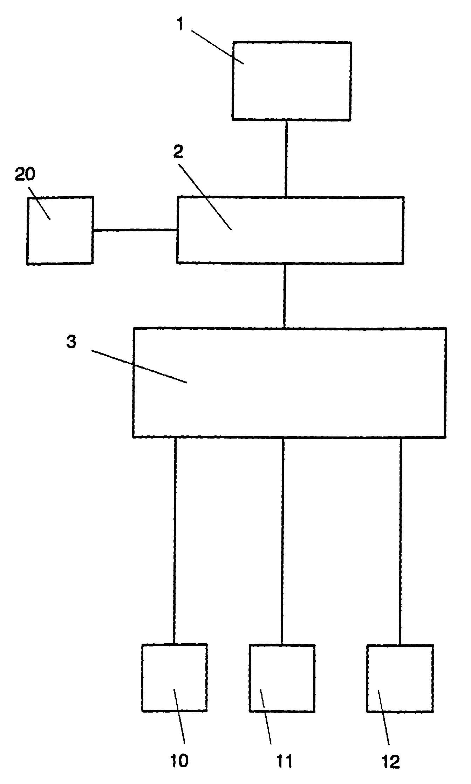

Die Erfindung ist in der Zeichnung dargestellt und nachfolgend näher beschrieben.

Die Abbildung zeigt in ihrer logischen funktionalen Zuordnung der einzelnen Elemente sowohl eine mögliche Ausbildung der Einrichtung hinsichtlich ihrer wichtigsten Elemente, und zum anderen zeigt die Abbildung in ihrer logischen Verknüpfung auch die Funktionsweise des erfindungsgemäßen Verfahrens.

Der oben beschriebene Sensor 1 ist dabei Ausgangspunkt für das Erkennen, daß der Fahrzeugführer sein Fahrzeug verläßt. Dieser Sensor 1 kann, wie oben bereits gesagt, entweder als Sitzsensor und/oder als Türöffnungssensor ausgebildet sein. Andere Möglichkeiten der sensorischen Erfassung sind möglich.

Das besagte Sensorsignal wird einer Sensorlogik 2 zugeführt, welche aus dem erzeugten Sensorsignal den Zustand, beispielsweise Verlassen des Fahrzeuges, erkennt. Innerhalb der Sensorlogik 2 wird das Sensorsignal, wie oben gesagt, ausgewertet und ein Signal für die Bremssystemlogik 3 generiert. Diese erkennt die oben genannte Situation des Verlassens des Fahrzeuges und greift sodann auf die Bremsorgane 10, 11 oder 12 ein. Die Bremsorgane 10 und 11 können sein, die sogenannte Handbremse, die normale druckmittelbetriebene Bremse oder wie im Falle der Positionsnummer 12, dasjenige Stellorgan, das die Parkposition des Automatikgetriebes bewirkt. Innerhalb der Bremssystemlogik 3 kann die Notwendigkeit des einen oder anderen Eingriffes auf die Bremswirkung entschieden werden und das entsprechende Bremsorgan betätigt werden. Hierzu können weitere Berücksichtigungen miteinfließen. Ein Beispiel hierfür ist die Berücksichtigung eines Tachogenerators 20, welcher signalisiert, wenn sich das Fahrzeug ungewollt bewegt. Es ist dann möglich, einen solchen Bremseingriff unter dieser Bedingung vorzunehmen, lediglich wenn zum Sensorsignal des Sensors 1 auch noch ein von 0 verschiedenes Signal des Tachogenerators 20 gemeinsam von der Sensorlogik 2 erfaßt werden.

Die Einbindung dieses Systems in ein übergeordnetes Abstandregelungssystem ist möglich in der oben bereits beschriebenen Art und Weise.

## Patentansprüche

1. Verfahren zur Steuerung des Bremssystemes bei einem Kraftfahrzeug,
dadurch gekennzeichnet,
daß abhängig von einem Signal, welches kennzeichnet, daß der Fahrzeugführer das Fahrzeug verläßt, das Bremssystem angesteuert wird.

2. Verfahren nach Anspruch 1,
dadurch gekennzeichnet,
daß das Hauptbremssystem angesteuert wird.

3. Verfahren nach Anspruch 1,
dadurch gekennzeichnet,
daß die Handbremse elektromotorisch automatisch betätigt wird.

4. Verfahren nach einem oder mehreren der vorhergehenden Ansprüche,
dadurch gekennzeichnet,
daß im Falle eines Automatikgetriebes dasselbe automatisch in die Parkposition geschaltet wird.

5. Verfahren nach einem oder mehreren der vorhergehenden Ansprüche,
dadurch gekennzeichnet,
daß beim Vorhandensein eines automatischen Abstandsregelungssystemes bei der in Anspruch 1 gegebenen Situation während kein Fahrzeugführer im Fahrzeug ist, dasselbe deaktiviert ist.

6. Verfahren nach einem oder mehreren der vorhergehenden Ansprüche,
dadurch gekennzeichnet,
daß die besagte automatische Aktivierung erst dann erfolgt, wenn das Fahrzeug ohne Fahrzeugführer anrollt.

7. Einrichtung zur Steuerung des Bremssystemes bei einem Kraftfahrzeug,
dadurch gekennzeichnet,
daß Sensoren (1) vorgesehen sind, über die das Verlassen des Fahrzeugführers aus dem Fahrzeug erkennbar ist und daß über die besagten Sensoren (1) in diesem Fall das Bremssystem (3, 10, 11, 12) automatisch aktivierbar ist.

8. Einrichtung nach Anspruch 6,
dadurch gekennzeichnet,
daß die automatische Ansteuerung des Bremssystemes über einen Bremsverstärker (10) erfolgt.

9. Einrichtung nach Anspruch 6,
dadurch gekennzeichnet,
daß die automatische Ansteuerung des Bremssystemes über eine elektromotorische Betätigung (11) der Handbremse erfolgt.

10. Einrichtung nach Anspruch 6,
dadurch gekennzeichnet,
daß die automatische Ansteuerung des Bremssystemes über eine Betätigung des Automatikgetriebes (12) in Parkposition erfolgt.

11. Verfahren nach einem oder mehreren der vorhergehenden Ansprüche,
dadurch gekennzeichnet,
daß der Sensor (1) bzw. die Sensoren der genannten Art als Sitzbelegungssensor und/ oder Sitzpositionssensor und/oder Türöffnungssensor ausgebildet sind.
